(19) Europäisches Patentamt

European Patent Office

Office européen des brevets

(11) **EP 0 805 830 B2**

(12) **NEUE EUROPÄISCHE PATENTSCHRIFT**

(45) Veröffentlichungstag und Bekanntmachung des Hinweises auf die Entscheidung über den Einspruch:
**05.06.2002   Patentblatt 2002/23**

(45) Hinweis auf die Patenterteilung:
**09.12.1998   Patentblatt 1998/50**

(21) Anmeldenummer: **96901283.0**

(22) Anmeldetag: **17.01.1996**

(51) Int Cl.[7]: **C08G 14/06**, C08G 12/38,
C08L 61/30, C08L 61/34
// (C08L61/30, 97:02),
(C08L61/34, 97:02)

(86) Internationale Anmeldenummer:
**PCT/EP96/00168**

(87) Internationale Veröffentlichungsnummer:
**WO 96/23014 (01.08.1996 Gazette 1996/35)**

(54) **WÄSSERIGE AMINOPLASTHARZE MIT VERBESSERTER WASCHBARKEIT FÜR DIE HERSTELLUNG VON HOLZWERKSTOFFEN**

MORE EASILY WASHABLE AQUEOUS AMINOPLAST RESINS FOR THE PRODUCTIONOF TIMBER MATERIALS

RESINES DU TYPE AMINOPLASTE AQUEUSES A LAVABILITE AMELIOREE, POUR LA PRODUCTION DE MATERIAUX DERIVES DU BOIS

(84) Benannte Vertragsstaaten:
**AT BE CH DE DK FR IT LI LU NL SE**

(30) Priorität: **27.01.1995  DE 19502581**

(43) Veröffentlichungstag der Anmeldung:
**12.11.1997   Patentblatt 1997/46**

(73) Patentinhaber: **BASF AKTIENGESELLSCHAFT**
**67056 Ludwigshafen (DE)**

(72) Erfinder:
• **MEIER, Anton**
**D-67134 Birkenheide (DE)**
• **SCHATZ, Hermann**
**D-67435 Neustadt (DE)**
• **LEHNERT, Heinz**
**D-67227 Frankenthal (DE)**
• **NIESSNER, Manfred**
**D-67105 Schifferstadt (DE)**

(56) Entgegenhaltungen:
EP-A- 0 332 917          DE-A- 3 125 874
DE-A- 3 442 454          FR-A- 2 092 232
GB-A- 1 340 935          US-A- 4 285 848
US-A- 4 978 711

• PATENT ABSTRACTS OF JAPAN PATENT ABSTRACTS OF JAPAN vol. 007, no. 135 (C-170), 11.Juni 1983 vol. 007, no. 135 (C-170), 11.Juni 1983 & JP,A,58 047027 (OOSHIKA SHINKOU KK), & JP,A,58 047027 (OOSHIKA SHINKOU KK), 18.März 1983, 18.März 1983,
• PATENT ABSTRACTS OF JAPAN PATENT ABSTRACTS OF JAPAN vol. 005, no. 028 (C-044), 20.Februar 1981 vol. 005, no. 028 (C-044), 20.Februar 1981 & JP,A,55 152741 (MITSUI TOATSU CHEM INC), & JP,A,55 152741 (MITSUI TOATSU CHEM INC), 28.November 1980, 28.November 1980,

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft wässerige Aminoplastharze mit einem Feststoffgehalt von 67 bis 72 Gew.-% und einer auf einen Feststoffgehalt von 67 Gew.-% bezogenen Viskosität von 150 bis 400 mPa·s (gemessen bei 20°C und einem Schergefälle von 500 s$^{-1}$ nach DIN 53018 ), erhältlich, indem man

I) in wässriger Lösung pro Mol Melamin (Komponente a)

- 0,5 bis 9 mol Harnstoff (Komponente b)
- 2 bis 20 mol Formaldehyd (Komponente c)
- 0 bis 1 mol Phenol und/oder eines kondensationsfähigen Phenolderivats (Komponente d)
- 0 bis 1 mol eines Alkalisulfits und/oder Alkalihydrogensulfits (Komponente e) und
- 0 bis 1 mol einer weiteren kondensationsfähigen Verbindung (Komponente f),

bis zu einer Viskosität von 150 mPa·s, bezogen auf einen Feststoffgehalt von 67 Gew.-% kondensiert, wobei das Verhältnis aus der Summe der Molmenge der in den Komponenten (a) und (b) ursprünglich vorhandenen (-NH$_2$)-Gruppen zur Molmenge der Komponente (c) 0,5:1 bis 3,5:1 beträgt, und die Komponenten (a) bis (f) in freier Form und/oder in Form von Umsetzungsprodukten, die Formaldehyd (Komponente c) sowie eine Komponente (a), (b), (d), (e) und/oder (f) enthalten, eingesetzt werden können

und

II) das in Stufe I erhaltene Kondensat mit 0,5 bis 0,8 mol Harnstoff pro Mol der in Stufe I und II eingesetzten Gesamtmenge an Harnstoff (Komponente b), die maximal 13 mol pro Mol Melamin beträgt, abmischt und falls erforderlich, durch Entfernung oder Zugabe von Wasser auf einen Feststoffgehalt von 67 bis 72 Gew.-% einstellt, wobei das Verhältnis aus der Summe der Molmenge der in den Komponenten (a) und (b) ursprünglich vorhandenen (-NH$_2$)-Gruppen zur Molmenge der Komponente (c) 0,8:1 bis 1,5:1 beträgt.

wobei das Verhältnis aus der Summe der Molmenge der in den Komponenten (a) und (b) ursprünglich vorhandenen (-NH$_2$)-Gruppen zur Molmenge der Komponente (c) 0,5:1 bis 3,5: 1 beträgt.

Weiterhin betrifft die Erfindung Verfahren zur Herstellung dieser Aminoplastharze, deren Verwendung als Bindemittel für die Herstellung von Holzwerkstoffen sowie Holzwerkstoffe, die unter Verwendung dieser Aminoplastharze erhältlich sind.

Wässerige Aminoplastharze aus Melamin, Harnstoff und Phenol sind allgemein bekannt (vgl. Ullmanns Encyklopädie der technischem Chemie, 4. Auflage, Band 7, S. 403 bis 422) und werden hauptsächlich für die Herstellung von hochwertigen, wetterfesten Spanplatten eingesetzt.

Bei der Herstellung von Spanplatten geht man im allgemeinen so vor, daß man vorgetrocknete Holzspäne mit einem wässerigen Aminoplastharz beleimt und die beleimten Späne bei 130 bis 250°C zu Platten verpreßt, wobei die Aminoplastharze aushärten.

Um die Spanplatten möglichst wirtschaftlich herstellen zu können. sollen die wässerigen Aminoplastharze einen möglichst hohen Feststoffgehalt aufweisen, damit bereits kurze Preßzeiten ausreichen, um das mit den beleimten Spänen eingebrachte überschüssige Wasser zu entfernen, und die Holzspäne möglichst wenig vorgetrocknet zu werden brauchen.

Daneben sollen die wässerigen Aminoplastharze bei einem möglichst hohen Feststoffgehalt eine Viskosität aufweisen, die ausreichend gering ist, um eine gleichmäßige Beleimung der Holzspäne ohne technische Schwierigkeiten zu gewährleisten.

Weiterhin sollen die wässerigen Aminoplastharze sowohl unmittelbar nach der Herstellung als auch nach längerer Lagerung eine gute "Waschbarkeit" aufweisen, das heißt, sie sollen sich mit Wasser unbegrenzt verdünnen lassen und dabei in eine Lösung oder Dispersion übergehen, die weitgehend frei von klebrigem Koagulat ist.

Aus der US-4 285 848 sind Aminoplastharze aus Phenol, Formaldehyd, Melamin und Harnstoff bekannt sowie deren Verwendung als Holzleimharz für die Herstellung von wetterfesten Holzwerkstoffen. Die Viskosität dieser Harze ist bei einem Feststoffgehalt von 67 % weit höher als 400 mPa·s.

Diese Eigenschaft erieichtert die Reinigung von Gegenständen, mit denen die wässerigen Aminoplastharze bei ihrem Transport und ihrer Verarbeitung in Kontakt kommen, erheblich.

Aus der DE-A 31 25 874 sind Aminoplastharze aus definierten Anteilen an Formaldehyd, Harnstoff, Melamin und Phenol bekannt, die man erhält, wenn man jeweils für sich ein Präkondensat aus Phencl, Formaldehyd und einem Alkalihydrogensulfit sowie ein Präkondensat aus Formaldehyd und Harnstoff herstellt und diese beiden Präkondensate zusammen mit Melamin und Formaldehyd kondensiert, wobei man dem so erhaltenen Kondensationsprodukt nach dem Abkühlen Harnstoff zusetzt. Aus der Beschreibung geht hervor, daß diese Aminoplastharze eine Viskosität von 150 bis 1000 mPa·s bei einem Feststoffgehalt von 50 bis 75 % und bevorzugt eine Viskosität von 200 bis 800 mPa·s bei einem Feststoffgehalt von 60 bis 70 % aufweisen.

Die Aufgabe bestand hier auch schon darin, die Waschbarkeit zu verbessern. Die Nacharbeitung der Beispiele zeigte, daß die Aminoplastharze zwar unmittelbar und kurz nach ihrer Herstellung noch eine befriedigende Waschbarkeit aufweisen, jedoch läßt die Waschbarkeit nach einer Lagerung über mehrere Wochen hinweg noch zu wünschen übrig. Außerdem weisen die in der Beschreibung spezifisch offenbarten Aminoplastharze mit einem Feststoffgehalt von 60 % und einer Viskosität von 200 mPa·s, wenn man deren Feststoffgehalt durch Abdestillieren von Wasser bei Raumtemperatur auf 67 % erhöht, eine Viskosität von mehr als 400 mPa-s auf.

Aufgabe der vorliegenden Erfindung war es deshalb, wässerige Aminoplastharze zu finden, welche für eine wirtschaftliche Herstellung von hochwertigen, wetterfesten Spanplatten geeignet sind und die insbesondere nach mehrwöchiger Lagerung noch eine gute Waschbarkeit aufweisen. Demgemäß wurden die eingangs definierten wässerigen Aminoplastharze gefunden.

Die wässerigen Aminoplastharze weisen einen Feststoffgehalt von 67 bis 72 Gew.-% und eine auf einen Feststoffgehalt von 67 Gew.-% bezogene Viskosität von 150 bis 400 mPa·s auf.

Die Angaben zum Feststoffgehalt beziehen sich auf Messungen, wobei 1 g des wässerigen Aminoplastharzes auf ein ebenes Blech ausgegossen und im Umlufttrockenschrank 2 h auf 120°C erhitzt wird und nach dem Abkühlen auf Raumtemperatur zurückgewogen werden.

Die Viskositäten werden nach DIN 53 018 in einem Rotationsviskosimeter bei 20°C und einem Schergefälle von 500 s$^{-1}$ gemessen.

Die wässerigen Aminoplastharze sind erhältlich, indem man in wässriger Lösung in der Stufe I pro Mol Melamin (Komponente a)

- 0,5 bis 9 mol, bevorzugt 1 bis 6 mol, Harnstoff (Komponente b)
- 2 bis 20 mol, bevorzugt 3 bis 10 mol, Formaldehyd (Komponente c)
- 0 bis 1 mol, bevorzugt 0 bis 0,2 mol, Phenol und/oder eines kondensationsfähigen Phenolderivats (Komponente d)
- 0 bis 1 mol, bevorzugt 0 bis 0,2 mol, eines Alkalisulfits und/oder Alkalihydrogensulfits (Komponente e) und
- 0 bis 1 mol, bevorzugt 0 bis 0,2 mol, einer weiteren kondensationsfähigen Verbindung (Komponente f),

bis zu einer Viskosität von 150 bis 1500 mPa·s, bezogen auf einen Feststoffgehalt von 67 % kondensiert, wobei das Verhältnis aus der Summe der Molmenge der in den Komponenten (a) und (b) ursprünglich vorhandenen (-NH$_2$)-Gruppen zur Molmenge der Komponente (c) 0,5:1 bis 3,5:1, bevorzugt 0,8:1 bis 1,5:1, beträgt. Mit der Molmenge der ursprünglich in den Komponenten (b) und (c) vorhandenen (-NH$_2$)-Gruppen ist die Molmenge gemeint, die in den monomeren Komponenten (b) und (c) vor Ihrer Umsetzung vorhanden waren.

Die Komponenten (a) bis (f) verstehen sich sowohl als Monomere als auch als von diesen Monomeren abgeleitete Einheiten, wie sie üblicherweise in Formaldehyd-Addukten und Vorkondensaten (vgl. Kunststoff Handbuch, 2. Auflage, 1988, Band 10, S. 6 bis 69) in gebundener Form enthalten sind.

Zur Herstellung der erfindungsgemäßen wässerigen Aminoplastharze können die Komponenten (a) bis (f) sowohl in monomerer Form als auch in Form ihrer Umsetzungsprodukte, die von monomerem Formaldehyd (Komponente c) sowie von einer monomeren Komponente (a), (b), (d), (e) und/oder (f) abgeleitete Einheiten enthalten, eingesetzt werden, d.h. in Form von Formaldehyd-Addukten und Vorkondensaten (vgl. loc. cit.).

Die Komponenten (a) und (b) (Melamin und Hamstoff) können in fester Form eingesetzt werden.

Bevorzugt wird die Komponente (b) in Form von konzentrierter wässeriger Lösung aus Harnstoff und Formaldehyd (Komponente c), die aus der DE-A 24 51 990 und der EP-A 0 083 427 bekannt sind, eingesetzt. Diese Lösungen aus 2,0 bis 6,0, bevorzugt 3,5 bis 4,5 mol Formaldehyd pro Mol Harnstoff haben bevorzugt einen Feststoffgehalt nach DIN 12 605 von 50 bis 85, bevorzugt von 60 bis 80 Gew.-%. Sie enthalten Hamstoff und Formaldehyd teils in freier monomerer Form, teils in Form von Umsetzungsprodukten wie Methylolhamstoffen oder niedermolekularen Kondensationsprodukten.

Diese Lösungen werden vorzugsweise so eingestellt, daß sie einen Gesamtformaldehydgehalt von 30 bis 60 Gew.-%, bevorzugt von 40 bis 55 Gew.-% und einen Gesamthamstoffgehalt von 15 bis 40, bevorzugt 20 bis 30 Gew.-% Harnstoff aufweisen. Sie enthalten günstigerweise neben freiem Formaldehyd und Mono- oder Polymethylolharnstoffverbindungen, die nur eine von Harnstoff abgeleitete Einheit enthalten, bevorzugt weniger als 10 Gew.-% Harnstoff-Formaldehyd-Kondensationsprodukte, die mehr als eine von Harnstoff abgeleitete Einheit enthalten.

Daneben kann es in manchen Fällen vorteilhaft sein, zumindest einem Teil des Formaldehyds (Komponente c) bevorzugt als 30 bis 50 gew.-%ige wässerige Lösung, als Paraformaldehyd oder in Form seiner Umsetzungsprodukte mit den Komponenten (a), (d), (e) und/oder (f) einzusetzen.

Als Komponente (d) kommen neben Phenol auch kondensationsfähige Phenolderivate in Betracht. Geeignete Phenolderivate sind beispielsweise Homologe des Phenols, z. B. (C$_1$- bis C$_6$)-Alkylphenole wie die Kresole, die Xylenole, Naphthole, 2,2-Bis(4-hydroxyphenyl)-propan (® Bisphenol A), 2,2'-Methylendiphenol (Bisphenol F), 1,1-Bis-(4-hydroxyphenyl)-ethan oder 1,1-Bis(4-hydroxyphenyl)-isobutan, Hydrochinon sowie Resorcin.

An Stelle oder neben dem Phenol bzw. seinen Derivaten kann auch ein Umsetzungsprodukt, das Phenol und/oder ein Phenolderivat und Formaldehyd enthält, eingesetzt werden. Diese Umsetzungsprodukte sind ebenfalls allgemein bekannt (vgl. Ullmann's Encyclopedia of Industrial Chemistry, 5. Auflage, Band A 19, S. 371-384). Es kommen vor allem wässerige Lösungen von Resolen in Betracht, die einen Feststoffgehalt von 30 bis 80 und bevorzugt von 50 bis 70 Gew.-% und eine Viskosität nach DIN 53 018 von 10 bis 5000, bevorzugt 50 bis 500 mPa·s aufweisen.

Die Resole enthalten üblicherweise Phenol und/oder ein Phenolderivat und Formaldehyd im Verhältnis 0,1 : 1 bis 3 : 1 und bevorzugt 0,3 : 1 bis 1 : 1.

Die Komponente (e), Alkalisulfit oder Alkalihydrogensulfit, kann in fester Form oder als wässerige Lösung eingesetzt werden.

Besonders günstig wird die Komponente (e) in Form eines Umsetzungsproduktes mit Formaldehyd, als Hydroximethansulfinsäure oder als Umsetzungsprodukt mit Phenol bzw. eines Phenolderivats und Formaldehyd, z.B. eines Resols, eingesetzt.

Vor allem kommen hierfür Resole in Betracht, in denen 0,35 bis 0,02 mol pro Mol des Phenols eines Alkalimetallhydrogensulfits und/oder Alkalimetallsulfits eingesetzt sind. Derartige Harze und ihre Herstellung sind beispielsweise in der DE-A 31 25 874 beschrieben.

Als sonstige kondensationsfähige Verbindungen (Komponente f) kommen Harnstoffderivate, z.B. Ethylenharnstoff, Acethylendiharnstoff, Dipropylentrisharnstoff und Dipropylentrisharnstoff sowie Guanamine, z.B. Benzoguanamin, Amide, z.B. ε-Caprolactam, Alkohole, z.B. Ethylenglycol in Betracht.

Die Kondensation nimmt man geeigneterweise bei 60 bis 100°C, bevorzugt bei 75 bis 95°C, und einem pH-Wert von 7,5 bis 10, bevorzugt von 8,2 bis 9,0, vor, wonach man die Lösung abkühlen läßt, bis sie eine Temperatur von 10 bis 80°C, bevorzugt von 40 bis 75°C, erreicht hat.

Das Molverhältnis aus der Summe der Molmenge der in den Komponenten (a) und (b) ursprünglich vorhandenen (-NH$_2$)-Gruppen zur Molmenge der Komponente (c) beträgt hierbei im allgemeinen 0,5:1 bis 3,5:1, bevorzugt 0,7:1 bis 2:1 und besonders bevorzugt 0,8:1 bis 1,5:1.

Im übrigen nimmt man die Kondensation in an sich bekannter Weise vor. Näheres ist z.B. Ullmanns Encyklopädie der technischen Chemie, 4. Auflage, Band 7, S. 403 bis 415 und der DE-A 34 42 454 zu entnehmen.

Das so erhaltene Kondensat wird anschließend in Stufe II mit 0,5 bis 0,8 mol Harnstoff pro Mol der in Stufe I und Stufe II eingesetzten Gesamtmenge an Harnstoff, die maximal 13 mol pro Mol Melamin beträgt, abgemischt und falls erforderlich, durch Entfernung von Wasser auf einen Feststoffgehalt von 67 bis 72 Gew.-% einstellt, wobei das Verhältnis aus der Summe der Molmenge der in den Komponenten (a) und (b) ursprünglich vorhandenen (-NH$_2$)-Gruppen zur Molmenge der Komponente (c) 0,8:1 bis 1,5:1 beträgt.

Wird bereits die Gesamtmenge an Harnstoff (Komponente b), welche das wässerige Aminoplastharz enthält, in der Stufe I eingesetzt, so werden die Komponenten (a) bis (f) selbstverständlich nur so lange kondensiert, bis eine Viskosität von 150 bis 400 mPa·s, bezogen auf einen Feststoffgehalt von 67 Gew.-%, erreicht ist. Sofern jedoch ein Teil des Harnstoffs in Stufe II zugesetzt wird, ist es im allgemeinen erforderlich, die Komponenten (a) bis (f) zu kondensieren, bis eine Viskosität von mehr als 150 mPa·s, bevorzugt von 200 bis 1500 mPa·s, bezogen auf einen Feststoffgehalt von 67 Gew.-%, erreicht ist, da durch den Zusatz des restlichen Harnstoffs die Viskosität herabgesetzt wird. Die für die Erniedrigung der Viskosität erforderliche Harnstoffmenge kann mit Hilfe einfacher Vorversuche ermittelt werden.

Der Harnstoff, der in Stufe II zugegeben wird, wird bevorzugt in fester Form oder in Form einer 40 bis 80 gew.-%igen, bevorzugt 60 bis 70 gew.-%igen, wässerigen Lösung zugegeben.

Die Art und Weise der Vermischung ist unkritisch und wird praktischerweise so vorgenommen, daß man den Harnstoff in das Kondensat einrührt.

Der definitionsgemäße Feststoffgehalt der erfindungsgemäßen wässerigen Aminoplastharze läßt sich besonders einfach erreichen, wenn bereits bei der Umsetzung der Komponenten (a) bis (f) entsprechende Mengen an Wasser mit eingesetzt werden. Es ist jedoch gleichfalls möglich, den Feststoffgehalt der wässerigen Aminoplastharze nachträglich einzustellen, indem man bei der Umsetzung der Komponenten (a) bis (f) und gegebenenfalls bei der Abmischung der Kondensate mit Harnstoff einen höheren oder niedrigeren Feststoffgehalt wählt und nachträglich Wasser hinzufügt oder, bevorzugt durch Destillation bei einer Temperatur von 15 bis 30°C und vermindertem Druck, Wasser entfernt.

Die wässerigen Aminoplastharze werden vorzugsweise auf einem pH-Wert von 8 bis 10, bevorzugt von 8,5 bis 9,5, eingestellt. Zur Einstellung des pH-Wertes können die allgemein üblichen Basen wie Alkali- oder Erdalkalihydroxide, bevorzugt in Form ihrer wäßrigen Lösungen, tertiäre Amine, z.B. Tri-(C$_1$- bis C$_6$-Alkyl)-amine wie Tributylamin und Triethylamin sowie tertiäre C$_1$- bis C$_6$-Alkanolamine, z. B. Triethanolamin, Methyldiethanolamin verwendet werden.

Die Aminoplastharze können gegebenenfalls mit weiteren gebräuchlichen Hilfs- und Zusatzstoffen abgemischt werden.

Zu ihrer Stabilisierung und zur Verbesserung der mechanischen Eigenschaften der mit den Aminoplastharzen hergestellten Holzwerkstoffe können den Aminoplastharzen Polyalkohole, Zucker und wasserlösliche Polymere, aufgebaut aus Monomeren wie Acrylamid, Ethylenoxid, N-Vinylpyrrolidon, Vinylacetat oder copolymerisierbaren Mischungen dieser Monomeren zugesetzt werden.

Die Reaktivität der Aminoplastharze beim Aushärten kann dadurch erhöht werden, daß ihnen zusätzlich ein Härter in Mengen von 0,1 bis 2 Gew.-%, bezogen auf den Feststoffgehalt des Bindemittels, zugefügt wird. Geeignete Härter sind Ammoniumsalze wie Ammoniumchlorid, Ammoniumsulfat, Ammoniumnitrat, Ammoniumphosphate, starke Carbonsäuren wie Ameisensäure und Oxalsäure, Mineralsäuren wie Schwefelsäure sowie p-Toluolsulfonsäure.

Weiterhin können den Aminoplastharzen Schädlingsbekämpfungsmittel, z.B. handelsübliche Insektizide oder Fungizide beigemischt werden.

Die Aminoplastharze eignen sich besonders als Bindemittel zur Herstellung von Holzwerkstoffen wie Sperrholz, aus Schichtholz aufgebauten Holzbalken oder Tischlerplatten und vor allem von Holzfaserplatten und Holzspanplatten (vgl. Ullmanns Encyclopädie der technischen Chemie, 4. Auflage, 1976, Band 12, S. 709 bis 727) aus zerkleinertem Holz.

Die Herstellung der Holzwerkstoffe erfolgt nach den auf diesem Fachgebiet allgemein bekannten Methoden (vgl. Ullmanns Encyclopädie der technischen Chemie, 4. Auflage, Band 12, S. 709 bis 726). Die Verleimung erfolgt günstigerweise, indem man das mit dem Aminoplastharz versehene zerkleinerte Holz bei Temperaturen von 120 bis 250°C verpreßt. Unter diesen Bedingungen härtet das Aminoplastharz rasch aus, und man erhält Holzwerkstoffe mit guten mechanischen Eigenschaften, die weitgehend unempfindlich gegenüber Feuchtigkeitseinflüssen sind.

Die erfindungsgemäßen Aminoplastharze zeichnen sich insbesondere dadurch aus, daß sie auch nach längerer Lagerung gut waschbar sind. Hierdurch wird die Reinigung von Transportbehältern und Anlagenteilen, mit denen die wässerigen Aminoplastharze verarbeitet werden, erleichtert.

Beispiele

Erläuterung der bei der Herstellung der wässerigen Aminoplastharze eingesetzten Ausgangsstoffe:

Phenol-Formaldehyd-Sulfit-Kondensat (PFS-Kondensat)

43,1 kg einer 40 %igen wässerigen Formaldehydlösung (575 mol), 27,0 kg Phenol (287 mol) und 4,49 kg Natriumsulfit (35,6 mol) wurden vermischt und unter Rühren auf 60°C erhitzt. Durch die exotherme Reaktion stieg die Temperatur auf 104°C und das Natriumsulfit geht in Lösung. Die Temperatur wurde auf 90°C eingestellt, bis die Viskosität ca. 600 mPa·s (20°C) betrug (10 min). Danach wurde auf Raumtemperatur abgekühlt.

Formol 50

Mischungen aus 50 Gew.-% Formaldehyd, 25 Gew.-% Harnstoff und 25 Gew.-% Wasser (vgl. EP-A-0 083 427)

Beispiel 1

85 g PFS-Kondensat (entspricht 0,65 mol Formaldehyd, 0,32 mol Phenol und 0,05 mol Natriumsulfit), 581 g Formol 50 (entspricht 9,68 mol Formaldehyd und 2,42 mol Harnstoff), 322 g (2,60 mol) Melamin wurden vermischt und so lange bei 95°C kondensiert, bis die Mischung eine Viskosität von 650 mPa·s erreicht hatte. Nach dem Abkühlen auf 62°C wurden 183 g (3,05 mol) Harnstoff zugegeben und anschließend auf Raumtemperatur abgekühlt.

Beispiel 1V (zum Vergleich)

Es wurde analog zu Beispiel 1 vorgegangen, jedoch wurden zusätzlich 170 g Wasser eingesetzt und die Abkühlung erfolgte bei Erreichen von einer Viskosität von 550 mPa·s.

Beispiel 2V (zum Vergleich)

66 kg PFS-Kondensat (entspricht 502 mol Formaldehyd, 249 mol Phenol und 40,5 mol Natriumsulfit), 451 kg Formol 50 (entspricht 7517 mol Formaldehyd und 1879 mol Harnstoff), 250 kg Melamin (1984 mol) und 78 kg Wasser wurden innerhalb von 31 min von Raumtemperatur auf 95°C erhitzt und 24 min bei dieser Temperatur kondensiert. Anschließend wurde innerhalb von 10 min auf 85°C abgekühlt und bei dieser Temperatur 10 min weiter kondensiert, wonach die Reaktionsmischung eine Viskosität von 560 mPa·s aufwies. Danach wurde innerhalb von 30 min auf 60°C abgekühlt, 142 kg (2367 mol) Harnstoff zugesetzt und auf Raumtemperatur abgekühlt.

Beispiel 3V (zum Vergleich)

Beispiel 1 von DE-A 31 45 328 wurde nachgearbeitet.

Prüfung der Eigenschaften der Aminoplastharze

Wasserverdünnbarkeit

10 g Leim werden in ein Becherglas gegeben. Unter Rühren wird solange Wasser zugegeben, bis es zur Bildung von Klumpen kommt. Die Wasserverdünnbarkeit ist das Verhältnis aus der Leimmenge zu der zugegebenen Wassermenge.

Waschbarkeit

Man taucht ein Rührelement, an dem ein Drahtnetz mit einer Maschenweite von 1 mm befestigt ist, für 1 min in das wässerige Aminoplastharz und läßt es anschließend 1 min abtropfen. Anschließend schleudert man einen Teil des Aminoplastharzes vom Rührelement ab, indem man es für 1 min bei 650 U/min in der Luft rotiert und wiegt die auf dem Rührelement verbliebene Menge an Aminoplastharz (E). Danach rotiert man das Rührelement erst für 1 min bei 650 U/min in einem Wasserbad und nach 1 minütigem Abtropfen wiederum für 1 min in der Luft und wiegt den auf dem Rührelement verbliebenen Rückstand (R).

Auswertung: (R X 100) / E = Naßrückstand [%]

Naßrückstände von < 25 % bedeuten eine gute,
Naßrückstände von > 50 % eine schlechte Waschbarkeit.

Feststoffgehalt

Eine genau bestimmte Menge an Leimharz (ca. 1 g) wird auf einem Wägeblech (Durchmesser 35 mm; Flachform mit ebenem Boden) in einem Umlufttrockenschrank 2 h auf 120°C erhitzt. Nach dem Abkühlen auf Raumtemperatur ermittelt man den Feststoffgehalt durch Rückwiegen und Vergleich mit der Einwaage.

Viskosität

Die Viskosität wird nach DIN 53 018 bei 20°C und einem Schergefälle von 500 $s^{-1}$ gemessen.
Die Prüfergebnisse sind in der folgenden Tabelle zusammengefaßt.

Tabelle

|  | Bsp. 1 | Bsp. 1V | Bsp. 2 | Bsp. 3V |
|---|---|---|---|---|
| Feststoffgehalt [%] | 69,9 | 63,3 | 67,6 | 62,6 |
| Viskosität [mPa·s] | 400 | 410 | 560 | 410 |
| Wasserverdünnbarkeit am Herstelltag<br>nach 3 Wochen | beliebig<br>1:2 | 1:0,9<br>1:0,5 | beliebig<br>beliebig | beliebig<br>keine |
| Naßrückstand [%] am Herstelltag<br>nach 2 Wochen<br>nach 3 Wochen<br>nach 6 Wochen | 19<br><br>18<br>19 | 71<br><br>87 | 17<br>28 | 33<br>67 |

**Patentansprüche**

**1.**   Wässerige Aminoplastharze mit einem Feststoffgehalt von 67 bis 72 Gew.-% und einer auf einen Feststoffgehalt von 67 Gew.-% (bestimmt nach der im experimentellen Teil angegebenen Methode) bezogenen Viskosität von 150 bis 400 mPa·s (gemessen bei 20°C und einem Schergefälle von 500 $s^{-1}$ nach DIN 53018), erhältlich, indem man

I) in wässeriger Lösung pro Mol Melamin (Komponente a)

- 0,5 bis 9 mol Harnstoff (Komponente b)
- 2 bis 20 mol Formaldehyd (Komponente c)
- 0 bis 1 mol Phenol und/oder eines kondensationsfähigen Phenolderivats (Komponente d)
- 0 bis 1 mol eines Alkalisulfits und/oder Alkalihydrogensulfits (Komponente e) und
- 0 bis 1 mol einer weiteren kondensationsfähigen Verbindung (Komponente f)

bis zu einer Viskosität von 150 bis 1500 mPa·s, bezogen auf einen Feststoffgehalt von 67 Gew.-%, kondensiert, wobei das Verhältnis aus der Summe der Molmenge der in den Komponenten (a) und (b) ursprünglich vorhandenen ($-NH_2$)-Gruppen zur Molmenge der Komponente (c) 0,5:1 bis 3,5:1 beträgt, und die Komponenten (a) bis (f) in freier Form und/oder in Form von Umsetzungsprodukten, die Formaldehyd (Komponente c) sowie eine Komponente (a), (b), (d), (e) und/oder (f) enthalten, eingesetzt werden können
und

II) das in Stufe I erhaltene Kondensat mit 0,5 bis 0,8 mol Harnstoff pro Mol der in Stufe I und II eingesetzten Gesamtmenge an Harnstoff (Komponente b), die maximal 13 mol pro Mol Melamin beträgt, abmischt und falls erforderlich, durch Entfernung oder Zugabe von Wasser auf einen Feststoffgehalt von 67 bis 72 Gew.-% einstellt, wobei das Verhältnis aus der Summe der Molmenge der in den Komponenten (a) und (b) ursprünglich vorhandenen ($-NH_2$)-Gruppen zur Molmenge der Komponente (c) 0,8:1 bis 1,5:1 beträgt.

2. Verfahren zur Herstellung von wässerigen Aminoplastharzen gemäß Anspruch 1, **dadurch gekennzeichnet, daß** man

I) in wässeriger Lösung pro Mol Komponente (a)

- 0,5 bis 9 mol Komponente (b)
- 2 bis 20 mol Komponente (c)
- 0 bis 1 mol Komponente (d)
- 0 bis 1 mol Komponente (e) und
- 0 bis 1 mol Komponente (f)

bis zu einer Viskosität von 150 bis 1500 mPa·s, bezogen auf einen Feststoffgehalt von 67 Gew.-%, kondensiert, wobei das Verhältnis aus der Summe der Molmenge der in den Komponenten (a) und (b) ursprünglich vorhandenen ($-NH_2$)-Gruppen und der Molmenge der Komponente (d) zur Molmenge der Komponente (c) 0,5:1 bis 3,5:1 beträgt, und die Komponenten (a) bis (f) ganz und/oder teilweise durch entsprechende Mengen an Umsetzungsprodukten von Formaldehyd (Komponente c) mit einer Komponente (a), (b), (d), (e) und/oder (f) ersetzt sein können
und

II) das in Stufe I erhaltene Kondensat mit 0,5 bis 0,8 mol Harnstoff pro Mol der in Stufe I und II eingesetzten Gesamtmenge an Harnstoff (Komponente b), die maximal 13 mol pro Mol Melamin beträgt, abmischt und falls erforderlich, durch Entfernung oder Zugabe von Wasser auf einen Feststoffgehalt von 67 bis 72 Gew.-% einstellt.

3. Verwendung der wässerigen Aminoplastharze gemäß Anspruch 1 als Bindemittel für die Herstellung von Holzwerkstoffen.

4. Holzwerkstoffe, erhältlich unter Verwendung der wässerigen Aminoplastharze gemäß Anspruch 1.


**Claims**

1. Aqueous aminoplast resins having a solids content of from 67 to 72% by weight and a viscosity of from 150 to 400 mPa·s (measured at 20°C and a shear gradient of 500 s$^{-1}$ in accordance with DIN 53018) based on a solids content of 67% by weight (determined by the method reported in the experimental part), obtainable by

I) condensing in aqueous solution per mole of melamine (component a)

- from 0.5 to 9 mol of urea (component b)
- from 2 to 20 mol of formaldehyde (component c)
- from 0 to 1 mol of phenol and/or of a condensation-capable phenol derivative (component d)
- from 0 to 1 mol of an alkali metal sulfite and/or an alkali metal bisulfite (component e) and
- from 0 to 1 mol of a further condensation-capable compound (component f)

to a viscosity of from 150 to 1500 mPa·s, based on a solids content of 67% by weight, wherein the ratio of the sum of the molar amount of the $-NH_2$ groups originally present in components (a) and (b) to the molar amount of component (c) is within the range from 0.5:1 to 3.5:1, and the components (a) to (f) can be used in free form and/or in the form of reaction products containing formaldehyde (component c) and a component (a), (b), (d), (e) and/or (f),
and

II) admixing the condensate obtained in step I with from 0 to 0.8 mol of urea per mole of the total amount of urea (component b) used in step I and II, which is not more than 13 mol per mole of melamine, and if necessary adjusting to a solids content of from 67 to 72% by weight, the ratio of the sum of the molar amount of the $-NH_2$ groups originally present in components (a) and (b) to the molar amount of component (c) is within the range from 0.8:1 to 1.5:1.

2. A process for preparing aqueous aminoplast resins as claimed in claim 1, **characterized in that** it comprises

I) condensing in aqueous solution per mole of component (a)

- from 0.5 to 9 mol of component (b)
- from 2 to 20 mol of component (c)
- from 0 to 1 mol of component (d)
- from 0 to 1 mol of component (e) and
- from 0 to 1 mol of component (f)

to a viscosity of from 150 to 1500 mPa·s, based on a solids content of 67% by weight, the ratio of the sum of the molar amount of the $-NH_2$ groups originally present in components (a) and (b) and the molar amount of component (d) to the molar amount of component (c) is within the range from 0.5:1 to 3.5:1, and the components (a) to (f) can be replaced wholly and/or in part by corresponding amounts of reaction products of formaldehyde (component c) with a component (a), (b), (d), (e) and/or (f),
and

II) admixing the condensate obtained in step I with from 0.5 to 0.8 mol of urea per mole of the total amount of urea (component b) used in step I and II, which is not more than 13 mol per mole of melamine, and if necessary adjusting to a solids content of from 67 to 72% by weight by removing or adding water.

3. The use of the aqueous aminoplast resins of claim 1 as a binder for making woodbase materials.

4. Woodbase materials obtainable using the aqueous aminoplast resins of claim 1.

**Revendications**

1. Résines aminoplastes aqueuses, d'une teneur en solides de 67 à 72 % en poids et d'une viscosité, rapportée à une teneur en solides de 67 % en poids, de 150 à 400 mPa.s (mesurées à 20°C et pour un gradient de cisaillement de 500 s$^{-1}$ selon la norme DIN 53018) que l'on peut obtenir,

I) en condensant en solution aqueuse, par mole de mélamine (composant a) :

- 0,5 à 9 moles d'urée (composant b)
- 2 à 20 moles de formaldéhyde (composant c)
- 0 à 1 mole de phénol et/ou d'un dérivé de phénol susceptible de condensation (composant d)

- 0 à 1 mole d'un sulfite de métal alcalin et/ou d'un hydrogénosulfite de métal alcalin (composant e) et
- 0 à 1 mole d'un autre composé susceptible de condensation (composé f),

jusqu'à une viscosité de 150 à 1500 mPa.s, par rapport à une teneur en solides de 67 % en poids, le rapport de la somme des proportions molaires des groupes (-NH$_2$)- présents à l'origine dans les composants (a) et (b) à la proportion molaire du composant (c) variant de 0,5:1 à 3,5:1, et les composants (a) à (f) pouvant être mis en oeuvre sous forme libre et/ou sous forme de produits de réaction qui contiennent du formaldéhyde (composant c) ainsi qu'un composant (a), (b), (d) et/ou (f),
et
II) en mélangeant le produit de condensation obtenu dans le stade I à de 0,5 à 0,8 mole d'urée par mole de la quantité totale d'urée (composant b) mise en oeuvre dans les stades I et II, représentant au maximum 13 moles par mole de mélamine et, en cas de nécessité, en réglant la teneur en solides à 67 à 72 % en poids par l'élimination ou l'addition d'eau, le rapport de la somme de la proportion molaire des groupes (-NH$_2$) présents à l'origine dans les composants (a) et (b) à la proportion molaire du composant (c) variant de 0,8:1 à 1,5:1.

2.  Procédé de préparation de résines aminoplastes aqueuses suivant la revendication 1, **caractérisé en ce que**

I) on condense en solution aqueuse et par mole de composant (a) :

- 0,5 à 9 moles de composant (b),
- 2 à 20 moles de composant (c),
- 0 à 1 mole de composant (d),
- 0 à 1 mole de composant (e) et
- 0 à 1 mole de composant (f),

jusqu'à une viscosité de 150 à 1500 mPa.s, par rapport à une teneur en solides de 67 % en poids, le rapport de la somme de la proportion molaire des groupes (-NH$_2$)- présents à l'origine dans les composants (a) et (b) et de la proportion molaire du composant (d) à la proportion molaire du composant (c) variant de 0,5:1 à 3,5:1, et les composants (a) à (f) pouvant être totalement et/ou partiellement remplacés par des proportions correspondantes de produtis de réaction du formaldéhyde (composant c) avec un composant (a), (b), (d), (e) et/ou (f),
et
II) on mélange le produit de condensation obtenu dans le stade I à de 0,5 à 0,8 mole d'urée par mole de la quantité totale d'urée (composant b) mise en oeuvre dans les stades I et II, représentant au maximum 13 moles par mole de mélamine et, en cas de nécessité, on régle la teneur en solides à 67-72 % en poids par l'élimination ou l'addition d'eau.

3.  Utilisation des résines aminoplastes aqueuses suivant la revendication 1 à titre de liant pour la fabrication de produits à base de bois.

4.  Produits à base de bois que l'on peut obtenir par l'utilisation des résines aminoplastes aqueuses suivant la revendication 1.